# EUROPÄISCHE PATENTSCHRIFT

(11) **EP 1 497 896 B1**
(45) Veröffentlichungstag und Bekanntmachung des Hinweises auf die Patenterteilung: **28.03.2007**
(21) Anmeldenummer: 04704599.2
(22) Anmeldetag: 23.01.2004
(51) Int. Cl.: H01S 3/03

(54) **BANDLEITERLASER**
RIBBON LASER
LASER A GUIDE EN RUBAN

(30) Priorität: 30.01.2003 DE 10303620
(43) Veröffentlichungstag der Anmeldung: 19.01.2005
(73) Patentinhaber: Rofin Sinar Laser GmbH, 22113 Hamburg (DE)
(72) Erfinder: ARMIER, Karl-Heinz, 22175 Hamburg (DE); HAGE, Hermann, 21033 Hamburg (DE)
(74) Vertreter: Mörtel & Höfner
(86) Internationale Anmeldenummer: PCT/EP2004/000548
(87) Internationale Veröffentlichungsnummer: WO 2004/068655

(56) Entgegenhaltungen:
- EP-A- 0 305 893
- CH-A- 665 921
- DE-A- 19 645 093
- DE-A- 19 927 288

## Beschreibung

Die Erfindung bezieht sich auf einen Slab- oder Bandleiterlaser wie er beispielsweise aus der EP-A1-0 275 023 und der EP-A2-0 305 893 bekannt ist.

Bei diesen Lasern befindet sich ein Lasergas zwischen flächenhaft ausgedehnten und mit ihren Flachseiten einander gegenüberliegenden Elektroden. Zwischen diesen Elektroden wird ein schmaler Entladungsraum gebildet, in dem das Lasergas, insbesondere CO₂, durch eine an die Elektroden angelegte Hochfrequenzspannung angeregt wird. Gegenüber den Stirnseiten des durch die Elektroden gebildeten schmalen Entladungsraumes sind zum Erzielen einer Laserwirkung Resonatorspiegel angeordnet.

Bei diesen bekannten Bandleiterlasern wird der bei der Gasentladung auftretende Wärmeeintrag durch Wärmeleitung über die in der Regel aus Kupfer bestehenden Elektroden abgeführt, so dass ein aufwendiges Gaszirkulationssystem nicht mehr notwendig ist. Eine Kühlung des Lasergases durch Wärmeübergang auf die mit Wasser gekühlten Elektroden ist bei solchen Bandleiterlasern ausreichend, da die Elektroden verhältnismäßig großflächig sind und ihr gegenseitiger Abstand, der typischerweise wenige Millimeter beträgt, verhältnismäßig gering ist, so dass das zwischen den Elektroden eingeschlossene Gasvolumen in Relation zur Kühlfläche ebenfalls verhältnismäßig klein ist.

Die mit Slab- oder Bandleiterlasern erzielbare Laserausgangsleistung hängt von der Fläche der Elektroden ab, wobei pro cm² Elektrodenfläche etwa 1,5 Watt bis 2,0 Watt erzeugt werden können. Um hohe Ausgangsleistungen erzielen zu können, sind großflächige Elektroden erforderlich, die jedoch auf Grund ihrer ungleichmäßigen Erwärmung nicht mehr im ausreichenden Maße parallel zueinander gehalten werden können. Da die innenliegenden, das heißt die zum Gas- bzw. Entladungsraum gerichteten Flachseiten erwärmt und die außenliegenden Flachseiten gekühlt werden, entsteht ein zur Wärmeabfuhr erforderlicher hoher Temperaturgradient, so dass sich die einander gegenüber liegenden Flachseiten einer Elektrode unterschiedlich thermisch ausdehnen. Dadurch entstehen Biegemomente, die bewirken, dass die Elektroden an ihren Enden einen größeren Abstand voneinander aufweisen als in der Mitte. Die dadurch verursachte Verzerrung der Elektroden verschlechtert das Laserverhalten, das heißt dessen Modenstabilität und -reinheit. Da die Durchbiegung mit wachsender Länge der Elektroden zunimmt, lassen sich mit den bekannten Lasern nur Laserausgangsleistungen von einigen hundert Watt erreichen.

Um Laserausgangsleistungen in der Größenordnung von einigen Kilowatt zu erzielen, ist deshalb in der WO 94/15384 vorgeschlagen worden, großflächige Elektroden in jeweils mehrere Abschnitte zu unterteilen, die wenigstens über einen Teil ihrer Dicke räumlich voneinander getrennt und derart gelagert sind, dass den durch thermische Ausdehnung verursachten Bewegungen ihrer vom Entladungsraum abgewandten Flachseiten nur ein vernachlässigbarer mechanischer Widerstand entgegengesetzt wird. Auf diese Weise wird die Krümmung der gesamten Elektrode in Einzelkrümmungen der Abschnitte aufgeteilt, die für sich wiederum so klein sind, dass sie das Betriebsverhalten des Lasers nicht mehr oder nur noch unwesentlich beeinflussen.

Dies ermöglicht die Verwendung von Elektroden, die bis zu 1 m lang und 0,5 m breit sind.

Um eine noch höhere Leistung zu extrahieren, wäre es nun prinzipiell möglich, die Abmessungen der Elektroden entsprechend zu erhöhen. Jedoch ist eine solche Skalierung nur bedingt möglich. Zum einen stößt die Herstellung sehr großer Elektroden mit der hinsichtlich ihrer Planizität erforderlichen Genauigkeit an fertigungstechnische Grenzen. Zum anderen ist eine Skalierung aus praktischen Gründen nur in Längsrichtung sinnvoll, da der erforderliche Fertigungsaufwand für die Resonatorspiegel mit zunehmender Querausdehnung enorm zunimmt. Eine Skalierung in Längsrichtung führt aber darüber hinaus zu einem Laseraufbau mit einer in der Praxis ungeeigneten Längenausdehnung.

Zur Erhöhung der Ausgangsleistung eines Gaslasers ist es beispielsweise aus der DD-Patentschrift 128 966 für konventionelle Gaslaser, bei denen das Lasergas in einem Entladungsrohr angeordnet ist, bekannt, einen sogenannten gefalteten Resonator einzusetzen, bei dem zwei oder mehr Gasentladungsrohre nebeneinander angeordnet und durch Faltspiegel miteinander gekoppelt sind.

Eine solche gefaltete Resonatoranordnung ist auch für Bandleiterlaser bekannt. In der EP 0 305 893 A oder der DE 196 45 093 C2 sind Faltanordnungen offenbart, bei denen zwei oder mehrere Entladungsräume über Faltspiegel miteinander gekoppelt und entweder parallel oder in einem spitzen Winkel zueinander derart angeordnet sind, dass die Faltungsebene entweder senkrecht oder in einem spitzen Winkel zu den Flachseiten des Entladungsraums orientiert ist. In der Praxis hat sich aber gezeigt, dass mit einer solchen Faltung allenfalls eine geringe Leistungserhöhung erzielt werden kann, die keinesfalls proportional zum Entladungsvolumen ist, wobei in ungünstigen Fällen bei diesen bekannten Faltungen sogar eine Leistungsverschlechterung beobachtet werden konnte.

Der Erfindung liegt nun die Aufgabe zu Grunde, einen kompakten Bandleiterlaser anzugeben, bei dem mit vertretbarem konstruktiven Aufwand eine höhere Ausgangsleistung erzielt werden kann.

CH-A-665921 offenbart einen Gas-Wellenleiter-Laser mit einer Mehrzahl von Elektroden paaren, zwischen denen jeweils ein schmaler Entladungsraum gebildet ist, wobei die Entladungsräume mit Spiegeln miteinander gekoppelt sind.

Die genannte Aufgabe wird gemäß der Erfindung gelöst mit den Merkmalen des Patentanspruches 1. Bei dem Bandleiterlaser befindet sich ein Lasergas zwischen flächenhaft ausgedehnten und mit ihren Flachseiten jeweils paarweise einander gegenüberliegenden Elektroden, wobei eine Mehrzahl von Elektrodenpaaren vorgesehen ist, zwischen denen jeweils ein schmaler Entladungsraum gebildet ist: Die Entladungsräume sind mit Faltspiegeln optisch miteinander gekoppelt und derart nebeneinander angeordnet, dass die sich parallel zu den Flachseiten der Elektroden erstreckenden Mittelebenen der Entladungsräume in einer gemeinsamen Ebene liegen, wobei zur Führung des Lasertrahls zwischen den jeweils unmittelbar miteinander gekoppelten benachbarten Entladungsräumen zumindest ein Wellenleiter vorgesehen ist.

Da ein Bandleiterlaser gemäß diesen Merkmalen aus einer Mehrzahl von innerhalb eines Resonators nebeneinander angeordneten, optisch miteinander gekoppelten relativ kurzen Elektrodenpaaren aufgebaut ist, kann bei gleichbleibendem fertigungstechnischen und konstruktiven Aufwand die extrahierbare Laserausgangleistung entsprechend der Anzahl der verwendeten Elektrodenpaare vervielfacht werden. Da außerdem die Elektrodenpaare derart nebeneinander angeordnet sind, dass eine Faltung der Entladungsstrecke in einer parallel zu den Elektroden verlaufenden Mittenebene des Entladungsraumes vorliegt und zwischen den Faltspiegeln ein Wellenleiter zum Führen des Lichtstrahls vorgesehen ist, können die Aus- und Einkoppelverluste deutlich verringert werden. Diese Verringerung ist möglich, da die zu überbrückenden Strecken, auf denen sich der Laserstrahl frei ausbreitet, anders als bei den aus der eingangs zitierten EP 0 305 893 A2 und der DE 196 45 093 C2 bekannten Faltanordnungen sehr kurz ausgeführt werden können, so dass eine Absorption des Laserstrahls durch nicht gekühltes, nicht angeregtes Lasergas weitgehend vermieden ist.

In einer besonders vorteilhaften Ausgestaltung der Erfindung ist der Wellenleiter durch voneinander beabstandete metallische Platten gebildet, die an eine Hochfrequenzspannung angeschlossen sind. Durch diese Maßnahme wird der Raum, in dem sich der Laserstrahl zwischen den Faltspiegeln ausbreitet als laseraktiver Entladungsraum genutzt, und trägt zur weiteren Leistungssteigerung bei.

In einer weiteren vorteilhaften Ausführungsform ist der Wellenleiter Teil eines Elektrodenpaares.

Weitere vorteilhafte Ausgestaltungen der Erfindung ergeben sich gemäß der Unteransprüche 4 bis 6.

Zur weiteren Erläuterung der Erfindung wird auf das Ausführungsbeispiel der Zeichnung verwiesen. Es zeigen:
- Fig. 1: einen Bandleiterlaser gemäß der Erfindung in einer schematischen Draufsicht auf die Flachseite der Elektroden,
- Fig. 2: einen Faltspiegel in einem Querschnitt,
- Fig. 3-5: weitere Ausführungsbeispiele für einen Bandleiterlaser gemäß der Erfindung.

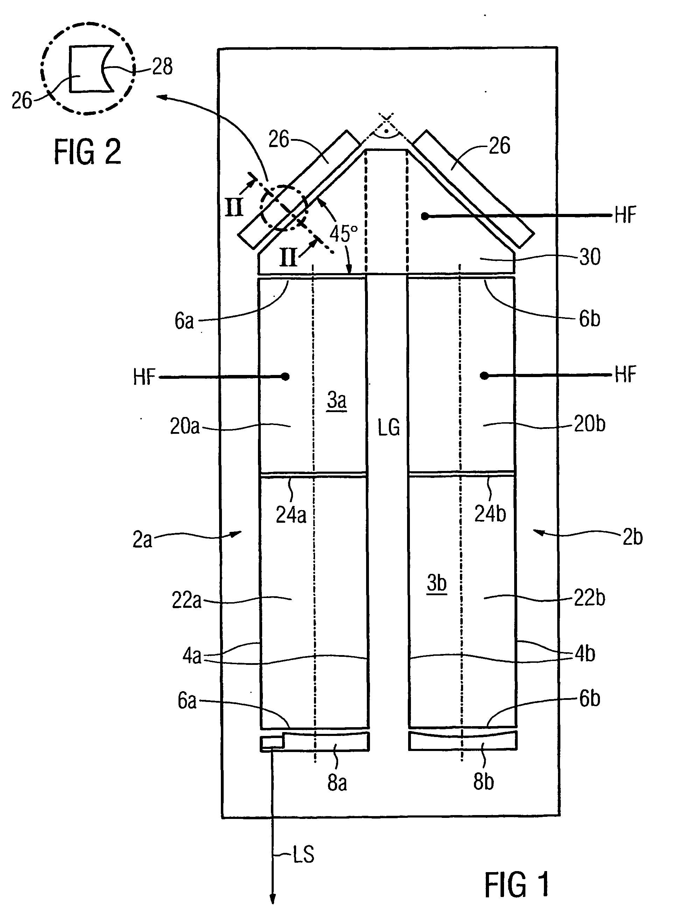

Gemäß Figur 1 enthält ein Bandleiterlaser zwei Elektrodenpaare 2a,b aus jeweils zwei voneinander beabstandeten, flächenhaft ausgedehnten Elektroden, von denen in der Daraufsicht gemäß der Figur nur jeweils die obere Elektrode sichtbar ist. Jedes dieser Elektrodenpaare 2a,b legt einen schmalen, quaderförmigen Entladungsraum 3a,b mit den Längsseiten 4a,b und Stirnseiten 6a,b fest, in dem sich ein Lasergas LG befindet. Die Entladungsräume 3a,b sind mit ihren Längsseiten 4a bzw. 4b parallel zueinander derart angeordnet, dass die Flachseiten ihrer Elektroden bzw. die Mittenebene der Entladungsräume 3a,b in einer gemeinsamen, zur Zeichenebene parallelen Ebene liegen.

Gegenüber einer der Stirnflächen 6a des Elektrodenpaares 2a und gegenüber der dazu benachbarten Stirnfläche 6b des Elektrodenpaares 2b ist jeweils ein gekrümmter Resonatorspiegel 8a,b angeordnet. Der Resonatorspiegel 8a dient als Auskoppelpiegel und der Resonatorspiegel 8b als Rückspiegel. Im Ausführungsbeispiel bilden die Resonatorspiegel 8a,b in der Zeichenebene einen instabilen Resonator des negativen Zweigs und der Laserstrahl LS tritt seitlich am Resonatorspiegel 8a aus dem Resonator aus. In der Figur ist die hierzu erforderliche konkave Krümmung der Resonatorspiegel 8a,b schematisiert dargestellt.

In der Figur ist zu erkennen, dass die Elektroden der Elektrodenpaare 2a,b im Ausführungsbeispiel jeweils zwei Abschnitte 20a, 22a bzw. 20b, 22b aufweisen, die gemäß der in der eingangs zitierten WO 94/15384 erläuterten Weise durch Nuten 24a,b voneinander getrennt sind. Alternativ hierzu können die Abschnitte 20a und 22a bzw. 20b und 22b durch einen Spalt vollständig voneinander getrennt sein.

Gegenüber den den Resonatorspiegeln 8a,b jeweils abgewandten Stirnseiten 6a bzw. 6b der Elektrodenpaare 2a bzw. 2b ist jeweils unter einem Winkel von 45° zur Stirnseite 6a bzw. 6b ein planer Faltspiegel 26 angeordnet. Mit diesen Faltspiegeln 26 werden die aus einem Entladungsraum 3a bzw. 3b an diesen Stirnseiten 6a bzw. 6b jeweils austretende Laserstrahlen in den benachbarten Entladungsraum 3b bzw. 3a eingekoppelt.

Im Ausführungsbeispiel ist zwischen den Faltspiegeln 26 außerhalb der von den Elektrodenpaaren 2a,b jeweils gebildeten Entladungsräume 3a bzw. 3b ein annähernd trapezförmiger ebener hohler Wellenleiter 30 angeordnet, in dem sich die an den Stirnseiten 6a,b aus dem Entladungsraum 3a bzw. b austretenden Laserstrahlen parallel zur Faltebene ausbreiten. Dieser Wellenleiter 30 wird durch voneinander beabstandete flache metallische Platten gebildet, die in einer vorteilhaften Ausgestaltung der Erfindung ebenso wie die Elektrodenpaare 2a,b an eine Hochfrequenzspannnung HF angeschlossen sind, so dass das zwischen ihnen befindliche Lasergas LG als laseraktives Medium genutzt werden und zur Laserleistung beitragen kann. Die metallischen Platten des Wellenleiters 30 sind auch dann ebenso wie die Elektrodenpaare 2a,b gekühlt, wenn sie nicht an eine Hochfrequenzspannnung HF angeschlossen sind. Der Abstand zwischen dem Wellenleiter 30 und den Elektrodenpaaren 2a,b sowie dem Wellenleiter 30 und den Faltspiegeln 26 sollte so klein wie möglich sein und wenige mm nicht überschreiten. In der Praxis haben sich Werte im Bereich von 3 - 4 mm als geeignet herausgestellt.

Grundsätzlich ist es auch möglich, die Elektrodenpaare 2a,b bis an die Faltspiegel 26 heranzuführen, so dass der Wellenleiter 30 durch einander benachbarte dreieckförmige Abschnitte der Elektrodenpaare 2a,b gebildet wird, wie dies in der Figur gestrichelt veranschaulicht ist. In diesem Ausführungsbeispiel müssen dann die Elektrodenpaare 2a,b mit ihren Langseiten 4a,b eng nebeneinander angeordnet werden, um die Einkoppelverluste zu minimieren.

Anstelle planer Faltspiegel 26 können gemäß Figur 2 auch Faltspiegel 26 Verwendung finden, deren Oberfläche 28 in einer Schnittebene senkrecht zur Zeichenebene eine gekrümmte Kontur aufweist, um eine Fokussierung der Laserstrahlen in den benachbarten Entladungsraum zu bewirken.

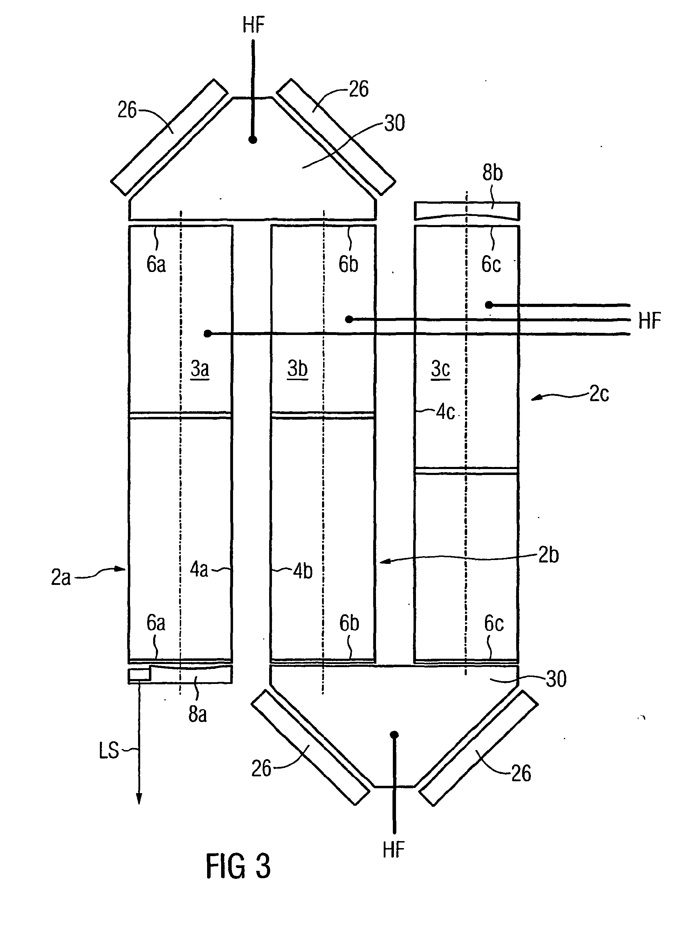

In Figur 1 ist eine Anordnung mit zwei Elektrodenpaaren 2a,b dargestellt. Grundsätzlich können aber auch mehr als zwei Elektrodenpaare nebeneinander angeordnet werden, wie dies im Ausführungsbeispiel gemäß Figur 3 anhand einer Anordnung mit drei Elektrodenpaaren 2a-c und diesen jeweils zugeordneten Entladungsräumen 3a-c veranschaulicht ist. Auch in dieser Anordnung sind die Entladungsräume 3a-c mit ihren Längsseiten 4a-c parallel nebeneinander angeordnet. Jeweils benachbarte Elektrodenpaare 2a,b bzw. 2b,c sind in diesem Fall durch diesen paarweise zugeordnete Faltspiegel 26 miteinander optisch gekoppelt, wobei nur an den Stirnseiten 6a bzw. 6c der außenliegenden Elektrodenpaare 3a und 3c die Resonatorspiegel 8a bzw. 8c angeordnet sind.

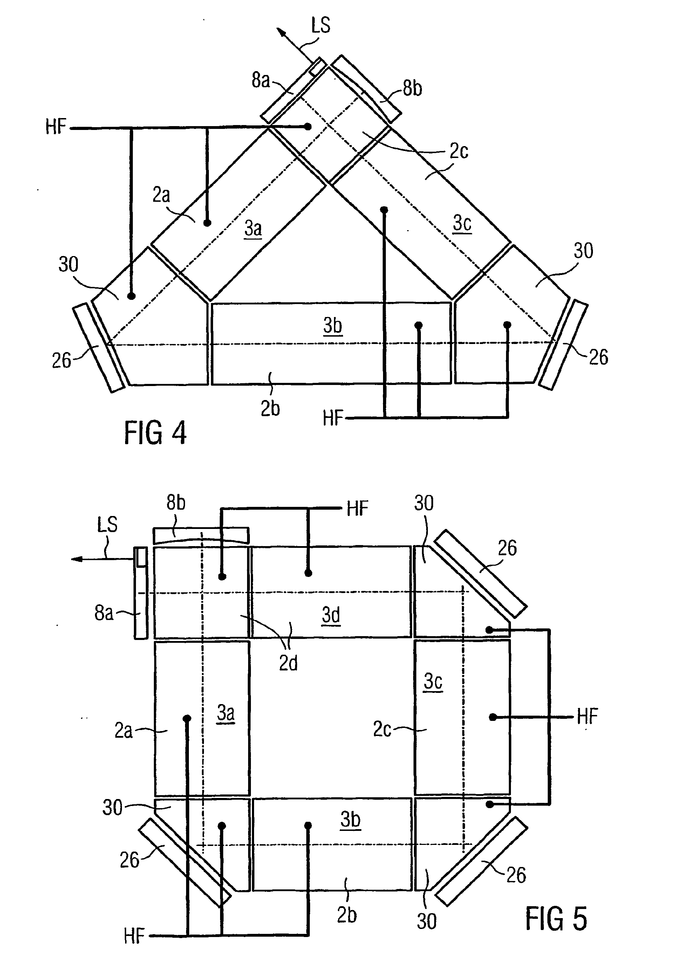

Im Ausführungsbeispiel gemäß Figur 4 ist eine Faltung veranschaulicht, bei dem von den Elektrodenpaaren 2a-c und den Wellenleitern 30 eine dreieckförmige Entladungsstrecke aufgebaut wird. Auch in diesem Fall sind die bei den Faltspiegeln 26 angeordneten Wellenleiter 30 durch Elektroden gebildet und werden mit derselben Hochfrequenzspannung HF versorgt wie die Elektrodenpaare 2a-c, so dass das laseraktive Volumen, d.h. der Raum, in dem eine Gasentladung stattfindet, über den jeweils durch die Elektrodenpaare 2a-c gebildeten Entladungsraum 3a-c hinaus bis in die unmittelbare Nähe der Faltspiegel 26 heranreicht und passive Strecken bei der resonatorinternen Ausbreitung des Laserstrahls LS weitgehend vermieden sind.

Ein weiteres Ausführungsbeispiel ist in Fig. 5 dargestellt, bei der die von Elektrodenpaaren 2a-d gebildeten Entladungsräume 3a-d gemeinsam mit den Wellenleitern 30 zu einer quadratischen oder rechteckigen Entladungsstrecke gekoppelt sind.

Auch in den Ausführungsbeispielen gemäß Fig. 2 bis 5 können die Wellenleiter 30 integraler Bestandteil der Elektrodenpaare sein, die ihrerseits wieder durch Nuten in kleinere Abschnitte aufgeteilt sein können, wie dies für die Elektrodenpaare 2c (Fig. 4) und 2d (Fig. 5) veranschaulicht ist.

## Patentansprüche

1. Bandleiterlaser, bei dem sich ein Lasergas (LG) zwischen flächenhaft ausgedehnten und mit ihren Flachseiten jeweils paarweise einander gegenüberliegenden Elektroden befindet, mit einer Mehrzahl von Elektrodenpaaren (2a-d), zwischen denen jeweils ein schmaler Entladungsraum (3a-d) gebildet ist, wobei die Entladungsräume (3a-d) mit Faltspiegeln (26) optisch miteinander gekoppelt und derart nebeneinander angeordnet sind, dass die sich parallel zu den Flachseiten der Elektroden erstreckenden Mittelebenen der Entladungsräume (3a-d) in einer gemeinsamen Ebene liegen, und mit zumindest einem Wellenleiter (30) zur Führung des Lasertrahls zwischen den jeweils unmittelbar miteinander gekoppelten benachbarten Entladungsräumen (3a-d).

2. Bandleiterlaser nach Anspruch 1, bei dem der Wellenleiter (30) durch voneinander beabstandete metallische Platten gebildet ist, die an eine Hochfrequenzspannung (HF) angeschlossen sind.

3. Bandleiterlaser nach Anspruch 2, bei dem der Wellenleiter (30) Teil eines Elektrodenpaares (2a - d) ist.

4. Bandleiterlaser nach Anspruch 1, 2 oder 3, mit Resonatorspiegeln (8a, 8b), die in der Ebene parallel zu den Flachseiten der Elektroden einen instabilen Resonator des negativen Zweigs bilden.

5. Bandleiterlaser nach einem der vorhergehenden Ansprüche, bei dem die Faltspiegel (26) plan sind.

6. Bandleiterlaser nach einem der Ansprüche 1 bis 4, bei dem die Faltspiegel (26) in einer zu den Flachseiten der Elektroden senkrechten Ebene gekrümmt sind.

## Claims

1. Stripline laser in which a laser gas (LG) is located between two-dimensionally extended electrodes respectively situated opposite one another in pairs with their flat sides, having a plurality of electrode pairs (2a-d) between which a narrow discharge chamber (3a-d) is formed in each case, the discharge chambers (3a-d) being optically coupled to one another with the aid of folding mirrors (26) and being arranged next to one another in such a way that the central planes, extending parallel to the flat sides of the electrodes, of the discharge chambers (3a-d) lie in a common plane, and having at least one waveguide (30) for guiding the laser beam between the adjacent discharge chambers (3a-d) respectively coupled to one another directly.

2. Stripline laser according to Claim 1, in which the waveguide (30) is formed by mutually spaced-apart metal plates which are connected to a high-frequency voltage (HF).

3. Stripline laser according to Claim 2, in which the waveguide (30) is part of an electrode pair (2a - d).

4. Stripline laser according to Claim 1, 2 or 3, having resonator mirrors (8a, 8b) that form an unstable resonator of the negative branch in the plane parallel to the flat sides of the electrodes.

5. Stripline laser according to one of the preceding claims, in which the folding mirrors (26) are plane.

6. Stripline laser according to one of Claims 1 to 4, in which the folding mirrors (26) are curved in a plane perpendicular to the flat sides of the electrodes.

## Revendications

1. Laser à ruban, dans lequel un gaz (LG) laser se trouve entre des électrodes s'étendant suivant une surface et opposées l'une à l'autre respectivement par paires par leur côté plat, comprenant une multiplicité de paires (2a -2d) d'électrodes entre lesquelles est formé un espace (3a-d) de décharge qui est étroit, les espaces (3a-d) de décharge étant couplés optiquement les uns aux autres par des miroirs (26) pliés, et étant disposés côte à côte de façon à ce que les plans médians, s'étendant parallèlement aux côtés plats des électrodes, des espaces (3a-d)de décharge se trouvent dans un plan commun et ayant au moins un guide d'onde (30) pour guider le faisceau laser entre les espaces(3a-d) de décharge, voisins couplés respectivement directement entre eux.

2. Laser à ruban selon la revendication 1, dans lequel le guide d'onde (30) est formé par des plaques métalliques qui sont à distance les unes des autres et qui sont raccordées à une tension (HF) en haute fréquence.

3. Laser à ruban suivant la revendication 2 dans lequel le guide d'onde (30) fait partie d'une paire (2a-d) d'une électrode.

4. Laser à ruban suivant les revendications 1, 2 ou 3 ayant des miroirs (8a, 8b) formant un résonateur, qui forment dans un plan parallèlement aux côtés plats des électrodes un résonateur instable de la branche négative.

5. Laser à ruban suivant les revendications précédentes 1 à 4, dans lequel les miroirs (26) pliés sont plan.

6. Laser à ruban suivant les revendications 1 à 4, dans lequel les miroirs (26) pliés sont courbés dans un plan perpendiculaire aux côtés plats des électrodes.
